# EUROPEAN PATENT SPECIFICATION

(11) **EP 2 322 343 B1**
(45) Date of publication and mention of the grant of the patent: **04.09.2013**
(21) Application number: 10190601.4
(22) Date of filing: 10.11.2010
(51) Int. Cl.: B29D 12/02, B29C 65/48

(54) **METHOD TO MAKE A COMPONENT OF ACETATE-BASED PLASTIC MATERIAL AND COMPONENT THUS MADE**
VERFAHREN ZUR HERSTELLUNG EINES PLASTIKEINZELTEILS AUF AZETATBASIS UND DAMIT HERGESTELLTES EINZELTEIL
PROCÉDÉ DE FABRICATION D'UN COMPOSANT EN MATIÈRE PLASTIQUE À BASE DE ACÉTATE ET COMPOSANT AINSI OBTENU

(30) Priority: 11.11.2009 IT UD20090197
(43) Date of publication of application: 18.05.2011
(73) Proprietor: Sari SRL, 32020 Lentiai (BL) (IT)
(72) Inventor: Cenere, Nicola, 36061, Bassano del Grappa (VI) (IT)
(74) Representative: Petraz, Gilberto Luigi

(56) References cited:
- GB-A- 645 356
- US-A- 4 443 074

## Description

### FIELD OF THE INVENTION

The present invention concerns a method to make a component, such as for example a detail for glasses frames, a bijouterie detail or other, made of acetate-based plastic material. In particular, the method according to the present invention concerns the production of the component starting from two or more sheets of plastic material based on acetate and cellulose. The present invention also concerns the component made of acetate-based plastic material thus made.

### BACKGROUND OF THE INVENTION

Different techniques for making components made of acetate-based plastic material are known, such as for example, but not only, the front pieces and sides of frames for glasses.

A first known technique provides to make the components by injecting acetate-based plastic material inside relative molds or molding templates.

This known technique on the one hand allows to make components that aesthetically have portions of different colors, for example an edge with a different color from the center, but on the other hand it needs complex apparatuses and controls that entail high management costs.

Furthermore, the injected material can include portions of air that remain imprisoned inside it, substantially forming bubbles. Not only can the bubbles cause aesthetic imperfections but also structural weakening of the component, with a consequent discard of production.

Another feature of the state of the art using injection is that the injectors at present on the market allow to perform substantially monochromatic injections of each layer, therefore limiting the aesthetic combinations possible.

One example of aesthetic limitation due to the injection technique is that using this technique it is not possible to make a layer with a predetermined polychromatic or variegated effect, such as a leopard skin or bone effect.

In order to overcome the disadvantages of the state of the art using injection, sometimes it is known to use the known technique in which layers are juxtaposed by gluing.

This known technique provides to juxtaposition laterally two or more sheets of acetate plastic material from cellulose, either headways or by superimposition, so as to fit together the respective external surfaces and glue them together.

Once the sheets have been glued together, the component is made by mechanical working.

The sheets can have the same or different thicknesses, they can be monochromatic, or they can have polychromatic or variegated effects, such as leopard skin, bone or other, so as to define different aesthetic effects.

This technique, although it is more economical, unlike the injection technique, does not allow to make a component in which the edge is made differently from the center of the component. In fact, the adjacent sheets define substantially parallel layers and extending in a single direction with respect to the component, and therefore without following specifically the profile of the component.

Document US-A-4, 443, 074 discloses a method according to the preamble of claim 1 and a product according to the preambe of claim 11; it describes a technique to make frames for glasses of reinforced plastic. This technique provides to bring together, by gluing or heat welding, two plastic plates or sheets on which grooves or incisions have been made to define seatings for the lenses and for the bridge for the nose and to house one or more metal reinforcement elements. The structure thus obtained by putting together the two plastic plates or sheets is subjected to milling so as to obtain the final desired form of the frames.

One purpose of the present invention is to perfect a method that allows to achieve, simply and effectively, a component made of acetate-based plastic material, which overcomes the disadvantages of the injection technique and also those of gluing in layers.

Another purpose of the present invention is to achieve a component, for example but not only for frames for glasses, which is simple and economical to make and which overcomes the disadvantages of the state of the art.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a method according to the present invention is applied to make a component, such as for example but not only, a component for glasses frames, made of acetate-based plastic material.

According to the present invention, the method provides at least the following steps:
- a first step of mechanical working in which, on two distinct sheets of acetate-based plastic material, a male element and a female element are made, having correlated shape so as to define a reciprocal same-shape coupling when inserted into each other and substantially concordant with the shape of the component to be made;
- a second adhesion step, in which the male element and the female element are coupled so as to define a semi-worked inlaid product, by means of same-shape coupling, inserting the male element inside the female element, so that the female element surrounds the external perimeter of the male element so that the female element defines at least partly the edge of the component; and
- a third finishing step in which, by means of mechanical working, the component is profiled and made starting from the semi-worked inlaid product.

In this way, in particular by defining the coupling of the female element and the male element, a condition is obtained wherein the female element substantially surrounds the male element so that, when the semi-worked inlaid product is profiled and finished, the result is that the female element constitutes the edge portion of the component, while the male element constitutes the central portion of the component.

In particular, with the present invention it is possible to obtain the total closed coupling of the perimeter of the male element, for example for the lens-bearing frames or the side of the glasses, whereas the state of the art only proposes the gluing of adjacent pieces which could follow the form of the object only for limited and discontinuous segments of the perimeter, and which does not allow to close the external perimeter of the object.

Therefore, by providing that the sheet from which the female element is made is a different color from the sheet from which the male element is made, after profiling and finishing of the semi-worked inlaid product, the component will have its external edge, or a greater or lesser portion of its external edge, the same color as the female element, while the central part will be the same color as the male element.

In this way, starting from sheets of acetate-based plastic material, a component is achieved that, in the state of the art, could only be made by injection.

With the method according to the present invention it is therefore possible to make components having the characteristics of components normally made by injection, but without the economic and operational disadvantages that this known technique normally has.

In particular, by providing one of the two sheets, or both sheets, with a predetermined polychromatic effect, for example leopard skin, bone or other, the effect will remain unchanged in the component made, in correspondence with the portion defined by one sheet or the other.

The component according to the present invention can therefore have an edge, or edged part, with a predetermined polychromatic effect. This particular embodiment cannot be achieved at present with the known techniques.

According to a variant, the second adhesion step provides at least a first gluing sub-step in which the male element and the female element are coupled and treated with a gluing material, such as for example an acetate-based compound, or pure acetone, to define a reciprocal gluing in the coupled condition.

According to a variant, the second adhesion step provides at least a second consolidation sub-step, after the first gluing sub-step, in which the male element and female element, glued together in the coupled condition, are kept under pressure to promote passivation and hence the reciprocal solidarization of the two.

According to another variant, the third finishing step comprises at least a first shimming sub-step, in which the overall thickness of the two elements male and female in the coupled condition is defined.

According to another variant, the third finishing step comprises at least a second profiling sub-step, after the first shimming sub-step, in which the component is made from the solid piece by delimiting at least the contours thereof.

According to a variant, the first mechanical working step comprises at least a first cutting sub-step, in which, starting from a sheet of acetate plastic material, respective tablets are made from which the male element and female element are made.

According to another variant, after the first cutting sub-step, the first mechanical working step provides a second sub-step in which, for example using a pantograph, the coordinated profiles of the male element and female element are made. Advantageously, in this second sub-step, functional apertures and/or holes are made both on the male element and on the female element, which allow the air to come out during the coupling steps in the second adhesion step.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a block diagram of the method according to the present invention;

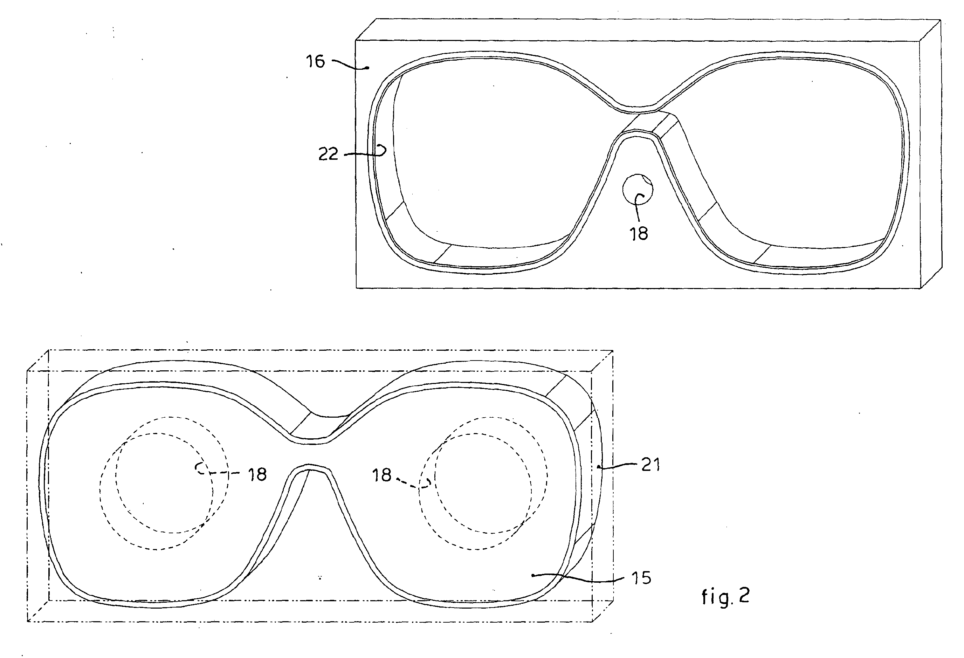

- fig. 2 is a schematic view of a first operating condition of the method shown in fig. 1, applied for making a component according to the present invention;

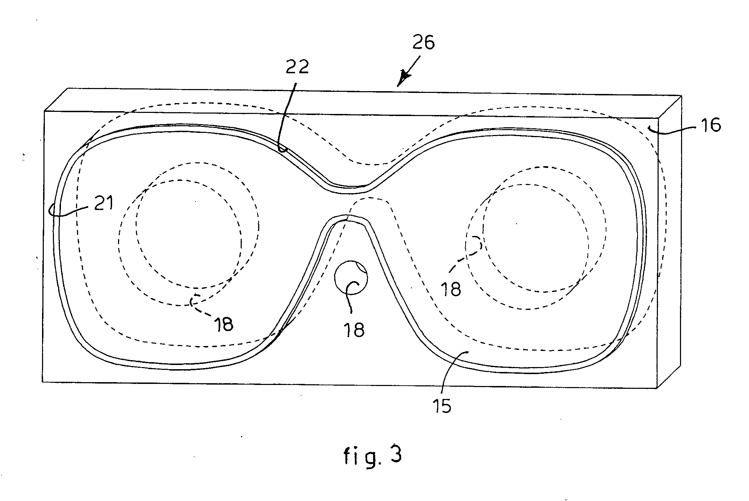

- fig. 3 is a schematic view of a second operating condition of the method according to the present invention;

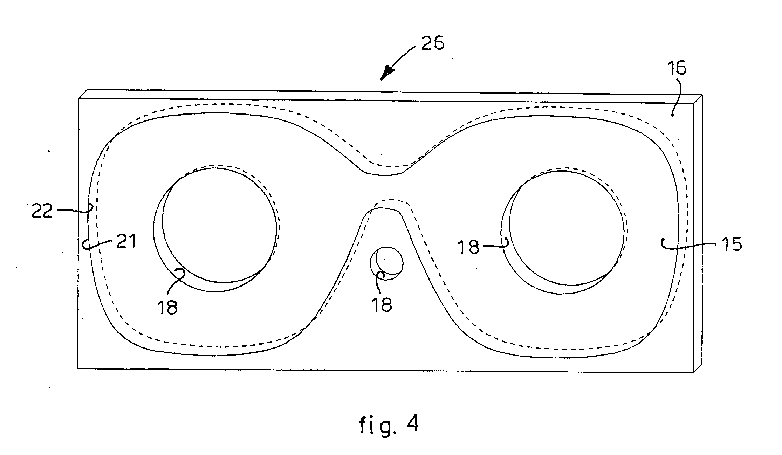

- fig. 4 is a schematic view of a third operating condition of the method according to the present invention;
- fig. 5 is a schematic view of a fourth operating condition of the method according to the present invention;
- fig. 6 shows an operating condition of the method in fig. 1, applied for making another type of component according to the present invention.

To facilitate comprehension, the same reference numbers have been used, where possible, to identify common elements in the drawings that are substantially identical. It is understood that elements and characteristics of one form of embodiment can conveniently be incorporated into other forms of embodiment without further clarifications.

### DETAILED DESCRIPTION OF A PREFERENTIAL FORM OF EMBODIMENT

With reference to the attached drawings, the number 10 indicates in its entirety a component, in this case the front piece of frames for glasses, made using the method according to the present invention.

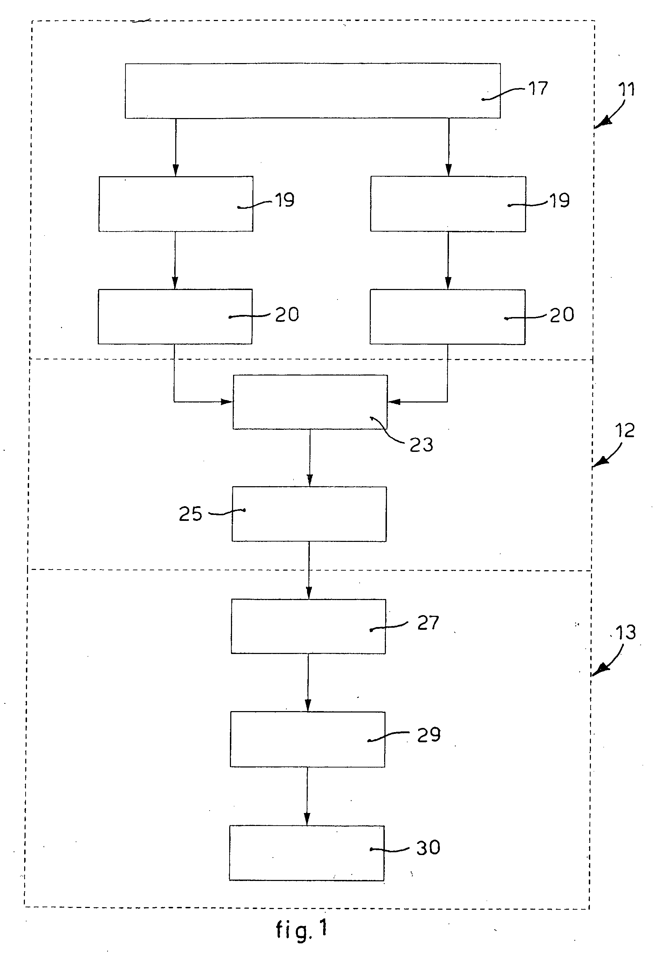

As shown in the block diagram in fig. 1, substantially three macro-steps of the method are provided, respectively a first mechanical working step 11, a second adhesion step 12 and a third finishing step 13.

The first step, as we said, is a mechanical working step in which two elements are made, respectively a male element 15 and a female element 16, from which the component 10 is then made.

In particular, the first step 11 of the method provides a first sub-step 17 of cutting to size a sheet of acetate- and cellulose-based plastic material into respective tablets of such material. The overall sizes of the tablets take into account the sizes and the shape of the component 10 to be made.

The sheet of plastic material can be monochromatic, dichromatic on opposite sides, polychromatic, at least partly transparent, shiny, opaque or with another predetermined shape, according to the coloring or aesthetic effect desired to be obtained for the component 10 to be made.

In the same way, each sheet can be a different color from the other, so that the male element 15 and the female element are different colors and therefore the component 10 made has the relative chromatic contrasts.

Once the tablets have been made from the sheets, a second sub-step 19 is started, in which the male element 15 and the female element 16 are physically made. For example, in fig. 1 the second sub-step 19 is divided in two rectangles to indicate the different workings made on the male element 15 and the female element 16.

The male element 15 is outlined to define a coupling profile 21 substantially having the external conformation of the component to be made.

The female element 16 is worked by making inside it a coupling seating 22 having a conformation substantially coinciding with the coupling profile 21 of the male element 15.

Advantageously, the coupling profile 21 and consequently the coupling seating 22 have sizes deliberately smaller than the real sizes of the component 10 to be made. As a result of this choice of size, once the component 10 has been made, the male element 15 constitutes at least partly the body of the component 10, while the female element 16, surrounding, in this case completely, the external perimeter of the male element 15, constitutes at least partly the edge of the component 10.

Apart from the coupling profile 21 and the coupling seating 22, on the male element 15 and the female element 16 in this second sub-step 19 one or more functional holes or seatings 18 are made, through and/or blind, the functions of which will be described in detail hereafter.

The first step 11 of the method according to the present invention also comprises a third sub-step 20, after the second sub-step 19, in which the male element 15 and the female element 16 are covered, the latter at least inside the coupling profile seating 22, with an acetate-based compound or pure acetone, to glue the parts together, which will take place in the second step 12 of the method according to the present invention. As for the second sub-step 19, in the third sub-step 20 too in fig. 1 two rectangles are provided to indicate the different workings made on the male element 15 and the female element 16.

During the second step 12 the two elements male 15 and female 16 already made are taken to a condition of adhesion.

The second step 12 of the method according to the present invention comprises a first adhesion sub-step, in which the male element 15 is disposed inside the coupling seating 22 of the female element 16 and, by means of the action of the compound based on acetone, or acetone, the male element 15 is glued into the female element 16, defining a semi-worked inlaid product 26. The insertion of the male element 15 into the female element 16 causes the latter to surround the external perimeter of the male element 15, defining at least partly the edge of the component 10.

During the insertion of the male element 15 into the coupling seating 22 of the female element 16, the air comes out through the holes or seatings 18 made previously, allowing a perfect adhesion of the coupling profile 21 of the male element 15 to the coupling seating 22 of the female element 16.

After the first sub-step 23 there follows a second pressing sub-step 25, in which the male element 15 and the female element 16 are held pressed together in the coupled condition, to promote the passivation of the materials and therefore to consolidate the adhesion of the male element 15 and the female element 16 in the condition of semi-worked inlaid product 26.

Once the semi-worked product 26 is consolidated, the third step 13 of the method according to the present invention is started; from the third step 13 the desired component 10 is obtained.

The third step 13 of the method provides at least a first shimming sub-step 27, in which the semi-worked product 26 is faced by mechanical working until a desired thickness is reached, substantially corresponding to the overall thickness of the component 10 to be obtained.

Once this thickness has been achieved, a second milling sub-step 29 is started, in which by means of a milling tool the rough outline of the component is defined, in this case the front piece for the frames, the rims, the bridge and others, so as to define, generally speaking, the external profile of the component 10.

Once this roughing-out has been done, a third finishing sub-step 30 is started, in which the external profile of the component 10 is precisely defined, and the functional details of the component 10 are made, such as for example in this case the positioning seatings of the lenses inside the rims of the front piece.

It is clear that modifications and/or additions of steps or parts may be made to the method and to the component 10 as described heretofore, without departing from the field and scope of the present invention.

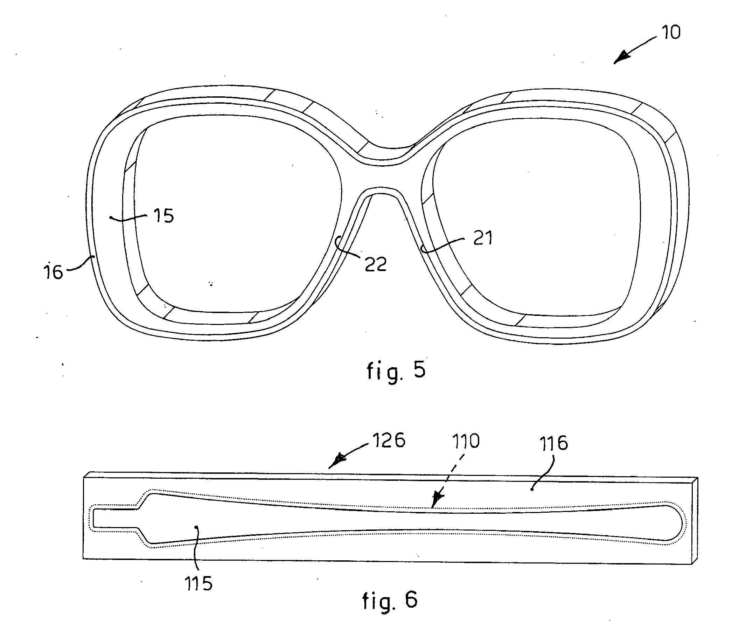

For example, it comes within the field of the present invention to provide, as shown for example in fig. 6, that the component 110 is an arm of frames for glasses. In this case too, following the steps referring to the embodiment of the component 10, the male element 115 and the female element 116 are made, in such a manner that they can be coupled with each other to define a semi-worked inlaid product 126.

In this variant solution too, the two elements male 115 and female 116 are glued together when coupled, inserting the female element 116 into the male element 115 so that the latter is surrounded by the female element 116 which defines at least part of the edge of the component 110, and then they are trimmed and finished to define the finished component 110.

It is also clear that, although the present invention has been described with reference to some specific examples, a person of skill in the art shall certainly be able to achieve many other equivalent forms of method to make a component made of acetate-based plastic material, and component thus made, having the characteristics as set forth in the claims and hence all coming within the field of protection defined thereby.

## Claims

1. Method to make a component (10, 110) of acetate-based plastic material, **characterized in that** it provides at least the following steps:
- a first step (11) of mechanical working in which from two different sheets of acetate-based plastic material a male element (15, 115) and a female element (16, 116) are made, having a correlated shape, to define a reciprocal same-shape coupling when inserted one inside the other, and substantially concordant with the shaping of the component (10, 110) to be made;
- a second adhesion step (12) in which said male element (15, 115) and said female element (16, 116) are coupled with each other so as to define a semi-worked inlaid product (26), by means of same-shape coupling, inserting said male element (15, 115) inside said female element (16, 116) so that said female element (16, 116) surrounds the external perimeter of said male element (15, 115) so that said female element (16, 116) defines at least partly the edge of the component (10, 110); and
- a third finishing step (13) in which said component (10, 110) is profiled and made by means of mechanical working, starting from said semi-worked inlaid product (26).

2. Method as in claim 1, **characterized in that** the second adhesion step (12) provides at least a first gluing sub-step (23) in which the male element (15, 115) and the female element (16, 116) are coupled with each other and are treated with a gluing material, to define a reciprocal gluing of said male element (15, 115) and said female element (16, 116) in the coupled condition.

3. Method as in claim 2, **characterized in that** the gluing material is an acetone based compound, or pure acetone.

4. Method as in claim 2 or 3, **characterized in that** the second adhesion step (12) provides at least a second consolidation sub-step (25), after the first gluing step (23), in which the male element (15, 115) and the female element (16, 116) glued together in the coupled condition are kept under pressure in order to promote passivation and then the reciprocal solidarization of the two.

5. Method as in any claim hereinbefore, **characterized in that** the third finishing step (13) comprises at least a first shimming sub-step (27), in which the overall thickness of the semi-worked inlaid product (26) is defined.

6. Method as in claim 5, **characterized in that** the third finishing step (13) comprises at least a second profiling sub-step (29), after the first shimming sub-step (27), in which the component (10, 110) is roughed out, and at least the contours thereof are delimited.

7. Method as in claim 6, **characterized in that** the third finishing step (13) comprises at least a third finishing sub-step (30) in which the component (10, 110) roughed out in the second profiling sub-step (29) is finished in its aesthetic and/or functional details.

8. Method as in any claim hereinbefore, **characterized in that** the first step (11) of mechanical working comprises at least a first cutting sub-step (17) in which, starting from a sheet of acetate plastic material respective tablets are made from which the male element (15, 115) and the female element (16, 116) are made.

9. Method as in claim 8, **characterized in that** after the first cutting sub-step (17), the first step (11) of mechanical working provides a second sub-step (19) in which a coupling profile (21) is made on the male element (15, 115), substantially having the external conformation of the component (10, 110), and on the female element (16, 116) a coupling seating (22) is made, having a conformation substantially coinciding with said coupling profile (21), to determine a same-shape coupling of the two in the second adhesion step (12).

10. Method as in claim 9, **characterized in that** the first step (11) also comprises a third sub-step (20), after the second sub-step (19), in which the male element (15, 115) and the female element (16, 116) are covered with a gluing material.

11. Component of acetate-based plastic material, **characterized in that** it is made by a method according to one of the claims 1 to 10 and comprises at least a male element (15, 115) and female element (16, 116) made from two different sheets of plastic material and coupled with each other by means of same-shape coupling, said male element (15, 115) being inserted inside said female element (16, 116), so that said female element (16, 116) completely surrounds the external perimeter of said male element (15, 115) said component (10, 110) comprising at least a central body made at least partly from said male element (15, 115) and at least an edge made at least partly from said female element (16, 116).

## Patentansprüche

1. Verfahren zur Herstellung eines Einzelteils (10, 110) aus einem Kunststoffmaterial auf Acetatbasis, **dadurch gekennzeichnet, dass** es zumindest folgende Schritte bereitstellt:
- einen ersten Schritt (11) von mechanischer Bearbeitung, in welchem von zwei unterschiedlichen Folien aus Kunststoffmaterial auf Acetatbasis ein männliches Element (15, 115) und ein weibliches Element (16, 116) hergestellt werden, welche eine korrelierte Form haben, um eine gegenseitige gleichförmige Kupplung zu definieren, wenn das eine in das andere eingesetzt wird, und im Wesentlichen übereinstimmend mit der Formgebung des Einzelteils (10, 110) sind;
- einen zweiten Schritt von Adhäsion (12), in welchem das männliche Element (15, 115) und das weibliche Element (16, 116) miteinander gekuppelt sind, um ein halbbearbeitetes Einlegeprodukt (26) zu definieren mittels gleichförmiger Kupplung, wobei das männliche Element (15, 115) in das weibliche Element (16, 116) eingesetzt wird, so dass das weibliche Element (16, 116) den äußeren Umfang des männlichen Elements (15, 115) umgibt, so dass das weibliche Element (16, 116) zumindest teilweise den Rand des Einzelteils (10, 110) definiert; und
- einen dritten Schritt von Endfertigung (13), in welchem das Einzelteil (10, 110) profiliert wird und mittels mechanischer Bearbeitung hergestellt wird ausgehend von dem halbbearbeiteten Einlegeprodukt (26).

2. Verfahren nach Anspruch 1, **dadurch gekennzeichnet, dass** der zweite Schritt von Adhäsion (12) zumindest einen ersten Teilschritt von Kleben (23) bereitstellt, in welchem das männliche Element (15, 115) und das weibliche Element (16, 116) miteinander gekuppelt und mit einem Klebematerial behandelt werden, um ein gegenseitiges Kleben vom männlichen Element (15, 115) und dem weiblichen Element (16, 116) in dem gekuppelten Zustand zu definieren.

3. Verfahren nach Anspruch 2, **dadurch gekennzeichnet, dass** das Klebematerial eine Verbindung auf Acetonbasis oder reines Aceton ist.

4. Verfahren nach Anspruch 2 oder 3, **dadurch gekennzeichnet, dass** der zweite Schritt von Adhäsion (12) zumindest einen zweiten Teilschritt von Festwerden (25) nach dem ersten Schritt von Kleben (25) bereitstellt, in welchem das männliche Element (15, 115) und das weibliche Element (16, 116), welche im gekuppelten Zustand zusammengeklebt sind, unter Druck gehalten werden, um eine Passivierung und dann die gegenseitige Festigung der beiden zu fördern.

5. Verfahren nach einem der vorhergehenden Ansprüche, **dadurch gekennzeichnet, dass** der dritte Schritt von Endbearbeitung (13) zumindest einen ersten Teilschritt von Ausgleichen (27) aufweist, in welchem die Gesamtdicke des halbbearbeiteten Einlegeprodukts (26) definiert wird.

6. Verfahren nach Anspruch 5, **dadurch gekennzeichnet, dass** der dritte Schritt von Endbearbeitung (13) zumindest einen zweiten Teilschritt von Profilieren (29) nach dem ersten Teilschritt von Ausgleichen (27) aufweist, in welchem das Einzelteil (10, 110) zerspant wird und zumindest die Konturen davon begrenzt werden.

7. Verfahren nach Anspruch 6, **dadurch gekennzeichnet, dass** der dritte Schritt von Endbearbeitung (13) zumindest einen dritten Teilschritt von Endbearbeitung (30) aufweist, in welchem das Einzelteil (10, 110), welches in dem zweiten Teilschritt von Profilieren (29) zerspant wird, in seinen ästhetischen und/oder funktionalen Einzelheiten endbearbeitet wird.

8. Verfahren nach einem der vorhergehenden Ansprüchen, **dadurch gekennzeichnet, dass** der erste Schritt (11) von mechanischer Bearbeitung zumindest einen ersten Teilschritt von Schneiden (17) aufweist, in welchem ausgehend von einer Folie aus Acetat-Kunststoffmaterial jeweilige Tafeln hergestellt werden, aus welchen das männliche Element (15, 115) und das weibliche Element (16, 116) hergestellt werden.

9. Verfahren nach Anspruch 8, **dadurch gekennzeichnet, dass** der erste Schritt (11) von mechanischer Bearbeitung nach dem ersten Teilschritt von Schneiden (17) einen zweiten Teilschritt (19) bereitstellt, in welchem ein Kupplungsprofil (21), welches im Wesentlichen die äußere Gestalt des Einzelteils (10, 110) aufweist, an dem mannlichen Element (15, 115) und ein Kupplungssitz (22), welcher eine im Wesentlichen mit dem Kupplungsprofil (21) übereinstimmende Gestalt aufweist, an dem weiblichen Element (15, 116) hergestellt werden, um eine gleichförmige Kupplung der beiden in dem zweiten Schritt von Adhäsion (12) zu bestimmen.

10. Verfahren nach Anspruch 9, **dadurch gekennzeichnet, dass** der erste Schritt (12) auch einen dritten Teilschritt (20) nach dem zweizen Teilschritt (19) aufweist, in welchem das männliche Element (15, 115) und das weibliche Element (16, 116) mit einem Klebematerial bedeckt werden.

11. Einzelteil aus einem Kunststoffmaterial auf Acetatbasis, **dadurch gekennzeichnet, dass** es mittels eines Verfahrens nach einem der vorhergehenden Ansprüche 1 bis 10 hergestellt ist und aufweist zumindest ein männliches Element (15, 115) und ein weibliches Element (16, 116), welche aus unterschiedlichen Folien aus Kunststoffmaterial hergestellt sind und miteinander mittels gleichförmiger Kupplung gekuppelt sind, wobei das männliche Element (15, 115) in das weibliche Element (16, 116) eingesetzt ist, so dass das weibliche Element (16, 116) vollständig den äußeren Umfang des männlichen Elements (15, 115) umgibt, wobei das Einzelteil (10, 110) zumindest einen mittleren Körper, welcher zumindest teilweise aus dem männliche Element (15, 115) hergestellt ist, und zumindest einen Rand, welcher zumindest teilweise aus dem weiblichen Element (16, 116) hergestellt ist, aufweist.

## Revendications

1. Procédé de fabrication d'un composant (10, 110) en matière plastique à base d'acétate, **caractérisé en ce qu'**il comprend au moins les étapes suivantes :
- une première étape (11) de travail mécanique dans laquelle, à partir deux feuilles différentes en matière plastique à base d'acétate, un élément mâle (15, 115) et un élément femelle (16, 116), ayant une forme en corrélation, sont fabriqués, de façon à définir un couplage de même forme réciproque lorsqu'ils sont insérés l'un dans l'autre et concordant sensiblement à la forme du composant (10, 110) à fabriquer ;
- une deuxième étape d'adhésion (12) dans laquelle ledit élément mâle (15, 115) et ledit élément femelle (16, 116) sont couplés l'un avec l'autre de façon à définir un produit incrusté semi-travaillé (26), au moyen du couplage de même forme, en insérant ledit élément mâle (15, 115) à l'intérieur dudit élément femelle (16, 116), de sorte que ledit élément femelle (16, 116) entoure le périmètre extérieur dudit élément mâle (15, 115) de sorte que ledit élément femelle (16, 116) définisse au moins partiellement le bord du composant (10, 110) ; et
- une troisième étape de finition (13) dans laquelle ledit composant (10, 110) est profilé et fabriqué au moyen d'un travail mécanique à partir dudit produit incrusté semi-travaillé (26).

2. Procédé selon la revendication 1, **caractérisé en ce que** la deuxième étape adhésion (12) comprend au moins une première sous-étape de collage (23) dans laquelle l'élément mâle (15, 115) et l'élément femelle (16, 116) sont couplés l'un avec l'autre et sont traités avec une matière collante, de façon à définir un collage réciproque dudit élément mâle (15, 115) et dudit élément femelle (16, 116) dans l'état couplé.

3. Procédé selon la revendication 2, **caractérisé en ce que** la matière collante est un composé à base d'acétone ou de l'acétone pure.

4. Procédé selon la revendication 2 ou 3, **caractérisé en ce que** la deuxième étape adhésion (12) comprend au moins une deuxième sous-étape de consolidation (25) après la première étape de collage (23), dans laquelle l'élément mâle (15, 115) et l'élément femelle (16, 116) collés ensemble dans l'état couplé sont maintenus sous pression afin de favoriser une passivation et ensuite la consolidation réciproque des deux éléments.

5. Procédé selon une quelconque revendication précédente, **caractérisé en ce que** la troisième étape de finition (13) comprend au moins une première sous-étape de compensation (27), dans laquelle l'épaisseur globale du produit incursté semi-travaillé (26) est définie.

6. Procédé selon la revendication 5, **caractérisé en ce que** la troisième étape de finition (13) comprend au moins une deuxième sous-étape de profilage (29), après la première sous-étape de compensation (27), dans laquelle le composant (10, 110) est dégrossi et au moins les contours de celui-ci sont délimités.

7. Procédé selon la revendication 6, **caractérisé en ce que** la troisième étape de finition (13) comprend au moins une troisième sous-étape de finition (30) dans laquelle le composant (10, 110) dégrossi dans la deuxième sous-étape de profilage (29) est fini au niveau de ses détails esthétiques et/ou fonctionnels.

8. Procédé selon une quelconque revendication précédente, **caractérisé en ce que** la première étape (11) du travail mécanique comprend au moins une première sous-étape de découpe (17) dans laquelle, à partir d'une feuille de matière plastique à base d'acétate, des plaques respectives sont fabriquées, à partir desquelles l'élément mâle (15, 115) et l'élément femelle (16, 116) sont fabriqués.

9. Procédé selon la revendication 8, **caractérisé en ce que**, après la première sous-étape de découpe (17), la première étape (11) de travail mécanique comprend une deuxième sous-étape (19) dans laquelle un profil de couplage (21) est fabriqué sur l'élément mâle (15, 115), ayant sensiblement la conformation extérieure du composant (10, 110) et, sur l'élément femelle (16, 116), un logement de couplage (22) est fabriqué, ayant une conformation coïncidant sensiblement avec ledit profil de couplage (21), de façon à déterminer un couplage de même forme des deux dans la deuxième étape d'adhésion (12).

10. Procédé selon la revendication 9, **caractérisé en ce que** la première étape (11) comprend aussi une troisième sous-étape (20), après la deuxième sous-étape (19), dans laquelle l'élément mâle (15, 115) et l'élément femelle (16, 116) sont recouverts d'une matière collante.

11. Composant en matière plastique à base d'acétate, **caractérisé en ce qu'**il est fabriqué par une procédé selon l'une quelconque des revendications 1 à 10 et qu'il comprend au moins un élément mâle (15, 115) et un élément femelle (16, 116) fabriqués à partir de deux feuilles différentes de matière plastique et couplés l'un à l'autre au moyen d'un couplage de même forme, ledit élément mâle (15, 115) étant inséré à l'intérieur dudit élément femelle (16, 116), de sorte que ledit élément femelle (16, 116) entoure complètement le périmètre extérieur dudit élément mâle (15, 115), ledit composant (10, 110) comprenant au moins un corps central fabriqué au moins partiellement à partir dudit élément mâle (15, 115) et au moins un bord fabriqué au moins partiellement à partir dudit élément femelle (16, 116).
